# EUROPEAN PATENT SPECIFICATION

(11) **EP 0 476 176 B1**
(45) Date of publication and mention of the grant of the patent: **04.12.1996**
(21) Application number: 90118172.7
(22) Date of filing: 21.09.1990
(51) Int. Cl.: D04H 1/64, D04H 1/00

(54) **Method for constructing panels based on mineral fibres such as glass fibres, rock wool and the like, and panel obtained by the method**
Verfahren für die Plattenherstellung aus Mineralfasern, wie Glasfasern, Steinwolle u.a., und nach diesem Verfahren erzeugte Platten
Méthode pour la réalisation de panneaux en fibres minérales, telles que fibres de verre, de roche ou semblable et panneaux obtenus par cette méthode

(43) Date of publication of application: 25.03.1992
(73) Proprietor: EUROFIBRE S.p.A., I-37046 Minerbe-Verona (IT)
(72) Inventor: Vaccari, Bruno, I-30020 Marcon, Venezia (IT)
(74) Representative: Piovesana, Paolo

(56) References cited:
- EP-A- 0 350 240
- GB-A- 822 639
- US-A- 2 994 630
- US-A- 3 017 318

## Description

This invention relates to a method for producing soft panels based on mineral fibres such as glass fibres, rock wool and the like and to panels produced by this method.

Panels are known consisting of a layer of mineral fibres such as glass fibres, treated with a polymerized organic size. For their construction, it is known to spray an organic size comprising a phenol-formaldehyde or melamine resin binder and an emulsifiable organic oil softener into a suitable collection chamber through which the glass fibres are made to descend under free fall conditions.

The thus treated fibres are then drawn by slight suction onto the base of said spray chamber in a region acting as a felting chamber in which they arrange themselves in the form of a soft layer, which is fed to a drying and polymerization chamber, from which a dimensionally stable product emerges for subjection to the final cutting and finishing operations.

Depending on the percentage of the various components, panels can be obtained having different levels of density, rigidity, thickness etc., suitable for the most varied applications essentially in the field of thermal and acoustic insulation.

This known method and the panels themselves have however a serie of drawbacks which it is the purpose of the present invention to obviate.

One of these drawbacks is that the maximum temperature which the organic size can withstand is 200-250°C, and this considerably limits the field of application of the panels.

A further drawback is that even below this temperature the organic size undergoes partial combustion with the development of fumes which are polluting because of the presence of phenol and formaldehyde, are of unpleasant smell, and soil those walls with which they come into contact.

A further drawback is that a flame retardant has necessarily to be mixed into the starch because of the combustible nature of the starch, plus a polymerization accelerator to limit the time for which the panel has to remain in the furnace for its formation.

Generally, urea is used as the flame retardant and ammonium sulphate as the polymerization accelerator, these substance representing a not indifferent part of the final product cost.

This cost is in any event already considerable, because the binder is costly and has a limited usability life due to the rapid reduction in its water solubility with time. Moreover, its use requires precise operating conditions which make its preservation problematical, especially during the hot months.

A further drawback is a high energy consumption in that the operating temperature of the drying and polymerization furnace is about 250°C.

A further drawback is that the binder is a harmful and pollutant substance which must be treated and handled with care, and always poses problems because of the process byproducts which have to be disposed of (wash water, fumes, panel scraps, etc.).

A further drawback is that the panel has to be traversed in the furnace by a hot air stream (250°C) for the purpose of polymerizing the binder.

For this reason, panels already provided with external support claddings cannot be constructed in a single stage because they cannot be traversed by the hot air stream, and therefore further stages are required to enable such claddings to be applied to the already constructed panel. This obviously increases costs both because of the increased processing times and the larger quantity of materials (adhesives) used.

US-A-3 017 318 discloses a method of producing substantially rigid article resistant to high temperatures and usable for examples as core materials for casting metals. For these the use of a softener is not considered due to the kind of the obtanaible products.

GB-A-822 639 describes a method of forming a pad or blanket from inorganic wool fibres, comprising coating the fibres with a lubricant so that they slide comparatively freely over one another, compacting the lubricated fibres, and removing the lubricant after the fibres have been compacted so that the compacted fibres become interlocked amongst themselves solely by their own roughness, thus forming a well interlocked pad or blanket.

US-A-2 994 630 discloses to use a softener in order to increase the softness and the transpirability of the water ragion of a synthetic product similar to the leather, which is obtained with fibres non wowen connected together through an organic binder.

According to the invention a method is produced for producing soft mineral fibre-based panels, as described in claim 1 and panels as described in claim 6.

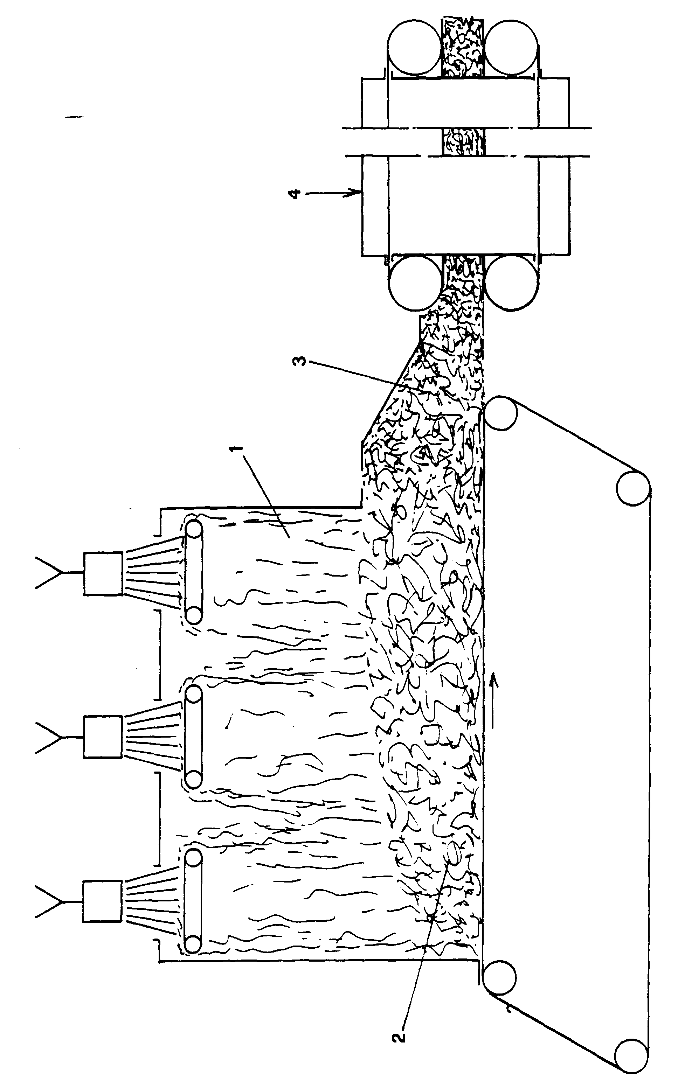

A preferred embodiment of the present invention is described in further detail hereinafter with reference to the accompanying drawing which schematically shows a plant for implementing the method according to the invention.

Essentially, according to the method of the invention the glass fibres, produced in the conventional manner, are allowed to fall freely within a spray chamber 1, and during their free fall are sprayed with an inorganic size comprising an aqueous solution of a salt which is able to create, by drying, polymeric chains having different molecular weight which have agglomerating functions with respect to the mineral fibres.

The different molecular weight can be determined and adjusted during the preparation phase of the aqueous solution according to the characteristics of the product to be obtained.

For example the process foresees that the inorganic size consists of an aqueous solution of aluminium polyphospate and a polyxiloxane emulsion. The acqueous solution of aluminium polyphospate constitutes the inorganic binder and the polyxiloxane as the inorganic softener of the binder. Possible emulsifying agents can also be incorporated in the emulsion.

In this case the polymeric chain consists of a structure with bonds of the type P-O-P in groups (PO₃)ₙ and likes.

The fibres sprayed in this manner are collected in the lower part of the spray chamber 1, which constitutes the felting chamber 2, it being provided with a mobile base and side walls and maintained under slight vacuum. From it, there leaves a soft layer 3 of impregnated fibres, which is fed through a drying furnace 4 between two endless conveyor belts, the distance apart of which can be adjusted to equal the final thickness of the panel to be obtained. Here, the layer of impregnated and compacted fibres is heated to about 120-130°C, ie to a temperature sufficient to evaporate the water of the inorganic size and thus provide dimensional stability to the felt panel leaving the furnace 4, so that it can then be subjected to the final cutting and finishing operations.

If panels with one or two support claddings are required, these latter can be applied to the surface or surfaces of the glass fibre layer as it enters the furnace 4, and from which the panel emerges already formed. This is possible because of the fact that there is no further need for polymerization, it being necessary only to evaporate the water, and therefore not only can the furnace temperature be kept lower, but there is no further requirement for the hot air stream to traverse the glass fibre layer.

From the aforegoing, it is apparent that the method according to the invention have considerable advantages over the traditional method, in that:
- the maximum temperature which the aqueous solution of aluminium polyphosphate and polyxiloxane are able to withstand is much higher than that of conventional organic sizes, the field of application of the panel consequently being considerably wider;
- a size no longer requires a polymerization accelerator or a flame retardant, this latter because of the substantial incombustibility of the sodium silicate;
- the raw material storage costs are substantially reduced, while their life is substantially increased;
- the precautions which previously had to be taken in handling the binder are pactically no longer applicable;
- panels already clad on one or both of their surfaces can be constructed in a single production stage;
- the traditional plants used up to the present time for producing glass fibre panels can be employed;
- the actual panel obtained can be used under temperature conditions considerably higher than those possible up to the present time for traditional panels because of the fact that the inorganic size has a greater resistance than organic size and that fume emission is practically totally eliminated under the conditions in which the panels are used.

## Claims

1. Method of producing soft panels based on mineral fibres, such as glass fibres, rock wool and the like, wherein the mineral fibres free falling within a spray chamber are sprayed with an inorganic size, characterized in that the size comprises a binder consisting of an aqueous solution of aluminium polyphosphate and a softener of said binder, and that the felt formed from the thus impregnated mineral fibres is subjected to heating and compaction at a temperature of 120-180°C to obtain a panel of constant thickness and dimensional stability for subjection to the final cutting and finishing operations.

2. Method as claimed in claim 1, characterized in that an aqueous emulsion of a polyxiloxane is used as softener.

3. Method as claimed in claim 2, characterized in that an aqueous emulsion of a polysiloxane is used as softener, to which emulsifying agents have been added.

4. Method as claimed in claim 3, characterized in that the felt formed from the fibres impregnated with the inorganic size is subjected to compaction between two conveyor belts passing mutually parallel and facing each other through a furnace (4) and spaced apart by a distance equal to the final thickness of the panel to be obtained.

5. Method as claimed in claim 4, characterised in that before subjecting the felt formed from the impregnated mineral fibres to heating and compaction, a sheet of cladding material is stuck to at least one of the two surfaces of said felt.

6. A panel obtained by the method claimed in one or more of claims 1 to 5 characterised by consisting of a layer of mineral fibres impregnated with an inorganic size comprising a binder consisting of an aqueous solution of aluminium polyphosphate and a softener of said binder.

7. A panel as claimed in claim 6 characterised in that the softner of said binder consists of an aqueous solution of polyxiloxane.

8. A panel as claimed in claim 7 in that emulsifying agents are added to the aqueous solution of polyxiloxane.

## Patentansprüche

1. Verfahren zur Herstellung weicher Platten auf der Basis von Mineralfasern, wie Glasfasern, Steinwolle und dgl., wobei die Mineralfasern, welche in einer Sprühkammer frei fallen, mit einer anorganischen Schlichte besprüht werden, dadurch gekennzeichnet, daß die Schlichte ein Bindemittel umfaßt, welches aus einer wässrigen Aluminiumpolyphosphatlösung und einem Weichmacher für das besagte Bindemittel besteht, und daß der Filz, der aus den so imprägnierten Mineralfasern gebildet wird, einer Erwärmung und einer Verdichtung bei einer Temperatur von 120° C bis 180° C unterworfen wird, um eine Platte konstanter Dicke und Dimensionsstabilität zur Unterziehung des abschließenden Zurechtschneidens und von Endbehandlungen zu erhalten.

2. Verfahren nach Anspruch 1, dadurch gekennzeichnet, daß eine wässrige Emulsion eines Polysiloxans als Weichmacher verwendet wird.

3. Verfahren nach Anspruch 2, dadurch gekennzeichnet, daß eine wässrige Emulsion eines Polysiloxans als Weichmacher verwendet wird, welcher Emulgiermittel zugesetzt worden ist.

4. Verfahren nach Anspruch 3, dadurch gekennzeichnet, daß der aus den mit der anorganischen Schlichte imprägnierten Fasern gebildete Filz einer Verdichtung zwischen zwei Förderbändern unterworfen wird, welche parallel zueinander und einander gegenüberliegend durch einen Ofen (4) verlaufen und in einem Abstand angeordnet sind, welcher der Enddicke der zu erhaltenden Platte entspricht.

5. Verfahren nach Anspruch 4, dadurch gekennzeichnet, daß, bevor der aus den imprägnierten Mineralfasern gebildete Filz der Erwärmung und Verdichtung unterworfen wird, eine Bahn aus einem Überzugsmaterial auf wenigstens eine der beiden Oberflächen des Filzes geklebt wird.

6. Platte, erhalten nach einer Methode nach einem oder mehreren der Ansprüche 1 bis 5, dadurch gekennzeichnet, daß sie aus einer Schicht aus Mineralfasern besteht, die mit einer anorganischen Schlichte imprägniert ist, welche ein Bindemittel umfaßt, das aus einer wässrigen Lösung von Aluminiumpolyphosphat und einem Weichmacher für das besagte Bindemittel besteht.

7. Platte nach Anspruch 6, dadurch gekennzeichnet, daß der Weichmacher des besagten Bindemittels aus einer wässrigen Polysiloxanlösung besteht.

8. Platte nach Anspruch 7, dadurch gekennzeichnet, daß Emulgiermittel der wässrigen Polysiloxanlösung zugesetzt worden sind.

## Revendications

1. Procédé pour la réalisation de panneaux mous en fibres minérales telles que des fibres de verre, de la laine de roche et similaires, selon lequel les fibres minérales tombant en chute libre à l'intérieur d'une chambre de diffusion sont pulvérisées avec une pâte d'encollage inorganique, caractérisé en ce que la pâte d'encollage comprend un liant constitué d'une solution aqueuse de polyphosphate d'aluminium et un ramolissant dudit liant, et en ce que le feutre formé à partir des fibres minérales ainsi imprégnées est soumis à du chauffage et du compactage à une température de 120-180 °C pour obtenir un panneau d'épaisseur constante et une stabilité dimensionnelle afin d'être soumis à des opérations de coupe et de finition finales.

2. Procédé selon la revendication 1, caractérisé en ce qu'une émulsion aqueuse d'un polyxyloxane est utilisée comme ramolissant.

3. Procédé selon la revendication 2, caractérisé en ce qu'une émulsion aqueuse d'un polyxyloxane à laquelle des agents émulsifiants ont été ajoutés est utilisée comme ramolissant.

4. Procédé selon la revendication 3, caractérisé en ce que le feutre formé à partir des fibres imprégnées avec la pâte d'encollage inorganique est soumis au compactage entre deux bandes de convoyeur passant parallèlement mutuellement et opposées l'une à l'autre à travers un four (4) et espacées d'une distance égale à l'épaisseur finale du panneau à obtenir.

5. Procédé selon la revendication 4, caractérisé en ce qu'avant que le feutre formé à partir des fibres minérales imprégnées soit soumis au chauffage et au compactage, une feuille de matériau de revêtement est collée à une au moins des deux faces dudit feutre.

6. Un panneau obtenu par le procédé selon une ou plusieurs des revendications 1 à 5, caractérisé en ce qu'il est constitué d'une couche de fibres minérales imprégnées d'une pâte d'encollage inorganique comprenant un liant constitué d'une solution aqueuse de polyphosphate d'aluminium et un ramolissant dudit liant.

7. Un panneau selon la revendication 6, caractérisé en ce que le ramolissant dudit liant est constitué d'une solution aqueuse de polyxyloxane.

8. Un panneau selon la revendication 7, caractérisé en ce que des agents émulsifiants sont ajoutés à la solution aqueuse de polyxyloxane.
